# EUROPEAN PATENT SPECIFICATION

(11) **EP 4 505 694 B1**
(45) Date of publication and mention of the grant of the patent: **16.09.2026**
(21) Application number: 22720424.5
(22) Date of filing: 04.04.2022
(51) Int. Cl.: H04L 67/50, H04L 9/40, H04W 12/08, H04W 12/088, H04W 12/72

(54) **NETWORK FUNCTION FOR USE IN HANDLING THE CREATION OF APPLICATIONS FOR SUBSCRIBERS**
NETZWERKFUNKTION ZUR VERWENDUNG BEI DER HANDHABUNG DER ERSTELLUNG VON ANWENDUNGEN FÜR TEILNEHMER
FONCTION DE RÉSEAU À UTILISER DANS LA GESTION DE CRÉATION D'APPLICATIONS POUR DES ABONNÉS

(43) Date of publication of application: 12.02.2025
(73) Proprietor: Telefonaktiebolaget LM Ericsson (publ), 164 83 Stockholm (SE)
(72) Inventor: BALDINI, Luca, 00174 Roma (IT); PATRIA, Gaetano, 81054 SAN PRISCO (CE) (IT); DEBENEDETTI, Paolo, 17012 Albissola Marina (SV) (IT); MASSINO, Davide, 16156 GENOVA (IT); GAITO, Daniele, 80131 Napoli (NA) (IT)
(74) Representative: Ericsson
(86) International application number: PCT/EP2022/058826
(87) International publication number: WO 2023/193872

(56) References cited:
- US-A1- 2016 241 641
- US-A1- 2017 111 373

## Description

### TECHNICAL FIELD

Disclosed are embodiments related to a network function (NF) that handles the creation of applications for subscribers.

### BACKGROUND

The sixth generation of wireless technology ("6G") follows up on the 4G and 5G technology, building on the revamped infrastructure and advanced capacity currently being established on millimeter-wave 5G networks. Using higher-frequency radio bands, 6G will give networks much faster speeds and lower latency, and, thus, the ability to support sophisticated mobile devices and systems.

New applications prospects, like the Internet of Senses (IoS), which merges communication with sensing capabilities, offer new application horizons to connectivity systems. Because of the multiplicity of use cases potentially generating massive amounts of data, 6G systems will also have to natively incorporate analytics and intelligence capabilities, in view of enabling real time decision making on high data volumes potentially originating from a vast number of sensors. Connected intelligence is hence expected to become a distinguishing feature of 6G systems, both at the service of the 6G platform performance and efficiency and at the service of the vertical use cases running on top of it.

At the same time, the large volumes of data that will have to be processed by a 6G system call for ultrahigh levels of security whilst respecting trust and data privacy. The network envisioned with 6G ecosystem will enable the Internet of Senses (IoS) providing the proper level of cyber security, in terms of data integrity and trustworthiness of the infrastructure and would be compliant with regulatory specifications.

6G devices will be provided not only of the electronic Senses technology, but also will be able to remotely reproduce the senses, for example during a phone call it will be possible not only to see who you are talking to but also to share smells.

6G devices will be available everywhere for different uses and in different environments such as personal wearable devices, devices for smart-home, automotive devices on cars, smart city devices and so on. We can envisage several groups of devices grouped in vertical sectors such as smart city, personal health, automotive, smart-home.

Information on the State of the Art of IoT and the IoT World Forum Reference Model can be found in Atlam, H., et. al., "Internet of Things: State-of-the-art, Challenges, Applications, and Open issues," International Journal of Intelligent Computing Research (IJICR), vol. 9, issue 3, Sept. 2019; information on the software, hardware, and security of IoT can be found in Singh, A. K., et. al., "Software and Hardware Security of IoT," 2021 IEEE International IOT, Electronics and Mechatronics Conference, 21-24 April 2021.

### SUMMARY

Certain challenges presently exist. For instance, it is expected that a vast number of IoT and IoS devices of many different types and from many different manufactures will be connected to a mobile network operator's (MNO's) network (e.g., a 5G or 6G MNO network), and it is also expected that at least some of these devices, if not many, cannot be easily integrated into the network due to their proprietary implementation and their dedicated cloud applications. Moreover, IoT and IoS devices are typically grouped in homogeneous groups per vertical sectors. For instance, there are IoT devices for personal health and wellness, devices for implementing smart cities, devices for use in automobiles, smart home devices, devices for industry, etc. Each group of devices is typically fully dedicated to a specific application handling its context and creating silos where devices and applications are self-contained to perform their task in the specific domain. Furthermore, the vendor of the IoT devices is also the vendor of the software (SW) application handling the device, hence another application is not easily able to use the same UE or it is not allowed at all. In such context it will be difficult to create smart applications making use of diverse types of devices in different contexts and from different vendors.
US2016/241641 A1 refers to a system and a method for allowing a second company to request a platform for a search for IoT devices of a first company that are suitable to interact with loT devices of the second company, where the search request comprises a list of criteria that is suitable for interacting IoT devices to have. The platform responds by displaying a page with results that match the criteria, after which the platform receives a selection by the second company of an IoT device that is made by the first company, thereby allowing IoT devices from the two companies to interact with each other.
US2017/111373A1 refers to various embodiments for increasing security of a network of interoperable devices, by applying a user-definable security policy that sets fourth one or more tests for validating input data or commands received from an IoT device.

The invention is defined by the appended claims. Accordingly, in one embodiment there is provided a method performed by an application handling function (AHF) of a mobile core network. The method includes receiving a query message transmitted by an application server function (ASF), the query message comprising a first subscriber identifier for identifying a first subscriber. The method also

includes using the first subscriber identifier (SID) to obtain a first user equipment (UE) profile associated with the first SID. The method further includes transmitting towards the ASF a query response message responsive to the query message, the query response message comprising the first UE profile. The first UE profile comprises i) a first UE identifier UID for the first UE of a first UE type and ii) at least one command ID (CID), each command identifying a command that the ASF has been authorized to invoke with respect to the first UE in connection with the ASF providing a service to the first subscriber.

In another aspect there is provided a method performed by an application server function (ASF) providing a service to subscribers. The method includes receiving an application request message comprising a first SID associated with a first subscriber. The method also includes transmitting to an application handling function (AHF) of a mobile core network a query message comprising the first SID, the query message causing the AHF to use the first SID to obtain a first UE profile associated with the first SID. The method also includes receiving, from the AHF, a query response message responsive to the query message, wherein the query response message comprises the first UE profile. The first UE profile comprises i) a first UE identifier for the first UE of a first UE type and ii) at least one command identifier (CID), each CID identifying a first command that the ASF has been authorized to invoke with respect to the first UE in connection with the ASF providing a service to the first subscriber.

In another aspect there is provided a computer program comprising instructions which when executed by processing circuitry of a network node causes the network node to perform any one of the methods disclosed herein. In another aspect there is provided a carrier containing the computer program, wherein the carrier is one of an electronic signal, an optical signal, a radio signal, and a computer readable storage medium. In another aspect there is provided a network node, where the network node is configured to perform any one of the methods disclosed herein. In some embodiments, the network node includes processing circuitry and a memory containing instructions executable by the processing circuitry, whereby the network node is configured to perform any one of the methods disclosed herein.

An advantage of the embodiments disclosed herein is that they enable the decoupling of SW applications from hardware (HW) devices, thereby enabling that applications can be designed making use of existing HW devices already owned by MNO subscribers. This will simplify and boost the design of new SW defined applications. Moreover, applications can become smarter since they can discover and use UEs owned or rented by a MNO subscriber. It will become possible to design an application that makes use all IoT devices owned by a user even though they are of different types, from different vendors, and belong to different environments (e.g., wearable devices, healthcare, Internet of Sense, Smart Home, Smart City, Automotive, etc.). An MNO that implements an embodiment in its network is not only able to provide bandwidth to an over-the-top (OTT) application provider, but also is able to deliver value added services. The possibility to mix different user needs and UE capabilities from diverse vertical sectors will allow an MNO to create hundreds of different combinations unlocking new smart and comprehensive applications. For some embodiments, additional advantages include increased security and traceability of malicious use of devices as some embodiments require that each UE registered in the network must be assigned to at least one subscriber in order to be active sending data and receiving commands. Additionally, some embodiments enable anonymization of user data and UE transactions thereby providing secure access to personal devices by 3^{rd} party applications. That is, in some embodiments, and application will only have access to an encrypted identity of user and devices and all the personal and devices sensitive information shall remain within the MNO.

### BRIEF DESCRIPTION OF THE DRAWINGS

The accompanying drawings, which are incorporated herein and form part of the specification, illustrate various embodiments.
FIG. 1 illustrates an exemplifying communication system.
FIG. 2 illustrates components of an application handling function according to some embodiments.
FIG. 3 is a message flow diagram illustrating a message flow according to an embodiment.
FIG. 4 is a message flow diagram illustrating a message flow according to an embodiment.
FIG. 5 is a message flow diagram illustrating a message flow according to an embodiment.
FIG. 6 is a message flow diagram illustrating a message flow according to an embodiment.
FIG. 7 is a message flow diagram illustrating a message flow according to an embodiment.
FIG. 8 is a flowchart illustrating a process according to an embodiment.
FIG. 9 is a flowchart illustrating a process according to an embodiment.
FIG. 10 illustrates a network node according to an embodiment.

### DETAILED DESCRIPTION

As described above, certain challenges presently exist including that, with the convention core network design, it will be difficult to create smart applications making use of diverse types of UEs in different contexts and from different vendors. For example, imagine a hypothetical application dedicated to wine drinkers that classifies the wine quality using an "electronic nose" IoT UE and a chromatic sensor. The same application could be configured to monitor the health state of the wine drinker by communicating with the drinker's wearable UE (e.g. smart watch that provides information about blood oxygen levels, blood pressure, and hearth pulses) and alert the drinker that the drinker is likely impaired. Depending on the level of impairment, the same application could communicate with a controller in the drinker's car to disable the car and, thereby, prevent the drinker from driving drunk.

With the IoT framework that exists today such a hypothetical application will be impossible or difficult to create because the application SW should be sold with the IoT or IoS devices (e-nose, chromatic-sensor, wearable device, and car device) and the cost would be extremely high. As an alternative, the application SW vendor should make agreements to each UE vendor to use the UE and access their interface. This approach is also unacceptable from security and privacy point of view since personal user data and sensitive UEs (like cars) would be exposed to third party applications. In short, today each UE is handled by an application in its own vertical sector and only the application is aware of the user/owner of the UE itself. There is no function in the network able to keep track of the user/owner of a certain UE in the network. This disclosure aims to overcome these issues.

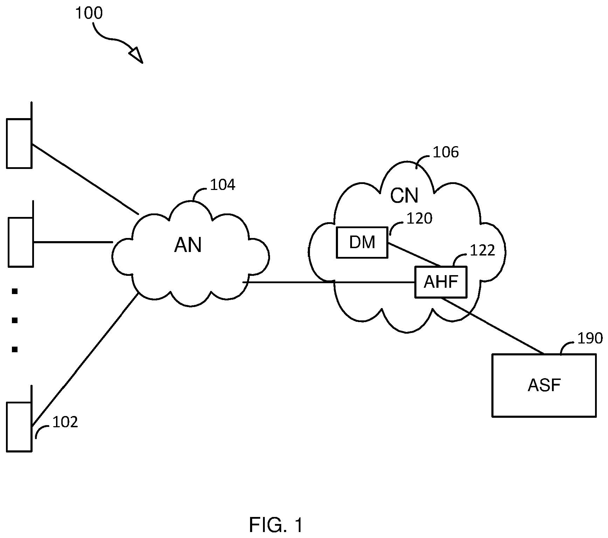

FIG. 1 illustrates a communication system 100, according to an embodiment, that enables any number of user equipments (UEs) (e.g., UE 102) to communicate with an application server function (ASF) 190 via an access network 104 (e.g., a radio access network (RAN) comprising one or more base stations) and a core network (CN) 106 operated by or for an MNO. As used herein, a UE is any communication UE (mobile or fixed) (e.g., mobile phone, sensor, controller, appliance, vehicle, tablet, laptop, residential gateway, IoT device, IoS, device, etc.) that is capable of communicating with the access network 104.

In the embodiment shown, CN 106 includes a data manager (DM) 120 and an application handling function (AHF) 122. DM 120 stores subscriber information. With respect to a 5G core network, DM 120 may correspond to the User Data Manager (UDM). In some embodiments, AHF 122 keeps track of the UEs (e.g., IoT devices) associated to each MNO subscriber (permanently or temporary owned by a subscriber).

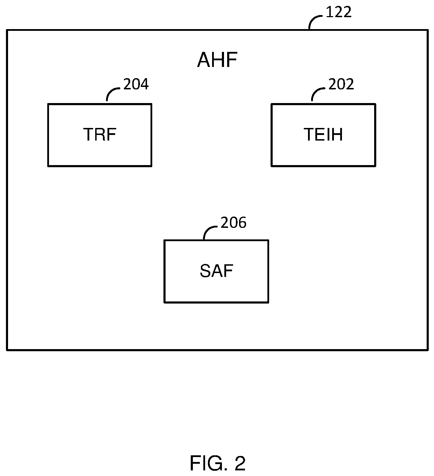

FIG. 2 illustrates components of AHF 122 according to some embodiments. As shown in FIG. 2, AHF 122 may include: a Things Exposure Interface (TEI) Handler (TEIH) 202; a Things Repository Function (TRF) 204; and a Security Anonymization Function (SAF) 206. The SAF handles anonymization of transactions and related key handling.

Any ASF will be enabled to interact with UEs through a TEI exposed by TEIH 202, and will be aware of the UEs owned by the subscriber requiring its service. This mechanism will enable the creation of smart SW application for subscribers based on a mix of multi-vendor UEs of different, not homogeneous type.

In some embodiments, AHF 122 is part of a 5G or 6G core network (in the full network or in a dedicated network slice) where the data, management & control (and billing) are fully in the domain of MNO.

In some embodiments, a UE can be associated with one or more subscribers at the same time (e.g., a home appliance can be associated to each person living in the home, a car to the mother and father who both drive it, a webcam is associated to the company where the mother works and run video conferences while each member of the family owns a wearable device).

The deployment of AHF 122 component in the MNO core network gives the possibility to maintain an association between the UE and who is using it. The subscriber using the UE is authenticated and identified by its SIM and its data in a DM. This gives several advantages in terms of security and open to new business case within MNO network.

With respect to security, a possible use case is that a UE will not be allowed to enter an active state until it is associated with a subscriber. This enhances security and control for potentially dangerous UEs (e.g., a drone that could be used for a nefarious purpose). The MNO can keep track of who is using what UE and when, and the data will be maintained and secured by the MNO.

With respect to a new business case, the MNO can make available a pool of costly UEs with a pay-per-use model to their subscribers. For instance, an MNO may generate revenue by renting IoT devices or offering the rent service to third parties.

In some embodiments, the MNO can expose to ASF 190 an interface using already existing technology, such as, for example, Lightweight Machine2Machine (LwM2M), Semantic Definition Format (SDF) where ASF 190 can interact with UEs associated with the MNO subscriber requesting the service.

The embodiments also enable new use cases, like filtering. In a filtering use case, AHF 122 may expose to ASF 190 only a subset of the functions of an IoT device and/or a subset of subscriber data. For example, AHF 122 may expose only the UE type (e.g., e-nose) and a limited set of functions that ASF 190 is allowed to invoke (e.g., command sniff and get smell result), but shall filter the specific UE brand or additional features (e.g., e-nose is also able to give alarm in case of smoke smell, but ASF 190 is not allowed to use this feature).

Subscriber details and data can be optionally pseudonymized and encrypted by the MNO. For example, ASF 190 will only be provided with an encrypted ID of the subscriber and selected data of the associated UE, while the subscriber data and the detailed data of UE are known only by MNO.

Subscribers may be authenticated and identified in the 5G/6G network by, for example, their SIM or eSIM and associated data in the UDM.

One subscriber can own/use several UEs. Similarly, a UE can be owned or rented by one or more subscribers. In some embodiments, UE ownership information is stored in the TRF. The TRF has the logic to handle the ASF requests towards the UEs and to forward the UE data towards the correct ASF. In case encryption is used, TRF will maintain the association between a UE ID (UID) (e.g., MAC address, International Mobile Equipment Identity (IMEI) or other UE identifier) and UE encrypted ID. TRF shall also be able to store the capabilities of new UE types when they register themselves in the network.

In some embodiments, the information identifying the subset of UE capabilities (filtering) that ASF 190 is allowed to use for a specific subscriber and specific type of UE is stored in the TEIH 202. The TEIH exposes this information to ASF 190 via the TEI. In some embodiments, TEIH may store the allowed capabilities of each UE per session. In some embodiments, for each UE a subscriber owns or rents, the subscriber will have the ability to authorize or not the use of capabilities of the subscriber's UE. That is, for each such UE, the subscriber will have the ability to specify which of the commands the UE supports ASF 190 is authorized to invoke.

In some embodiments, before ASF 190 can send commands to a subscriber's UE an initialize phase and a subscription phase are needed.

In the initialization phase, a new UE type is announced. After the UE type is announced, a UE of that UE type may be registered in AHF 122. When the UE is registered metadata regarding the UE is stored in DM 120 and the DM communicates to the TRF a UID associated with the UE and a UE type ID indicating the UE's type.

After the UE is registered, a subscriber may buy or rent the UE. When the subscriber buys or rents the UE, the TRF will store information associating the UID a subscriber ID for the subscriber.

After the subscriber buys/rents the UE, the subscriber may request ASF 190 to provide a specific service (application) to the subscriber. ASF 190 will then send to AHF 122 a query message comprising one or more UE type IDs, where each UE type ID identifies a type of UE that ASF 190 requires the user to have in order for ASF 190 to provide its service to the subscriber. ASF 190 and the subscriber will handshake UE profile through TEIH and TRF. If ASF 190 is authorized to provide the service to the subscriber, ASF 190 will receive back the IDs of the UEs and methods to use via an UE profile. Optionally the UIDs could be anonymized, and a set of keys will be communicated instead of the real ones. ASF 190 can now perform its task getting data and sending authorized commands to the subscriber's UEs. All the transactions can be anonymized to protect the data from possible leakage

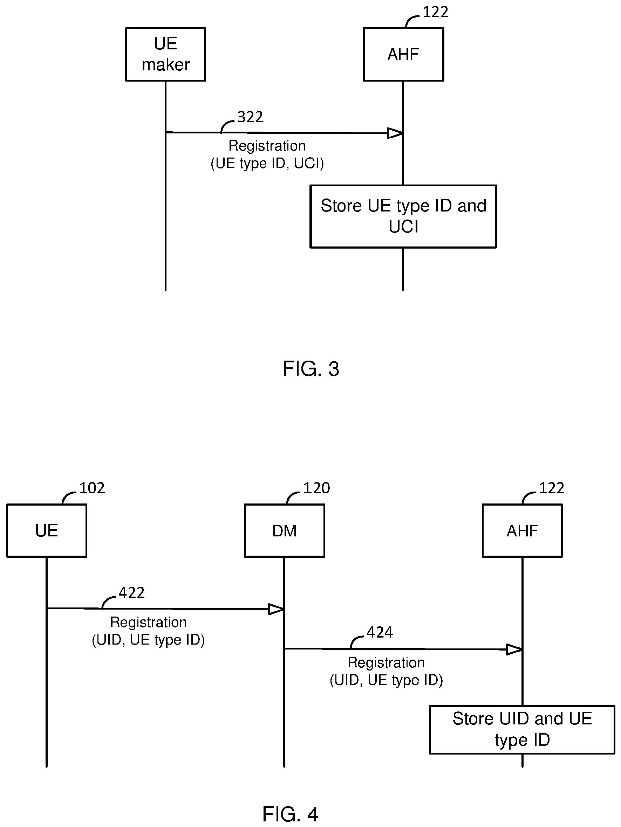

FIG. 3 is a message flow diagram illustrating the initialization phase according to some embodiments. As shown in FIG. 3, a UE manufacturer or distributer ("UE maker") sends to AHF 122 a registration message 322 to register a new UE type. The registration message comprises a UE type ID that identifies the new UE type and a UE capability information (UCI) comprising capability information indicating the commands that UEs of the UE type will support. That is, for example, the UCI may comprise one or more command identifiers (CIDs), where each CID identifies a command that UEs of the UE type support. For example, if the UE type is "temperature sensor," then the UCI may indicate that any UE of this UE type supports a "report current temperature" command. In response to receiving registration message 322, AHF 122 stores the UE type ID and UCI in a database so that the UCI is associated with the UE type ID. Table 1 illustrates an example of UCI that may be included in message 322.

**TABLE 1**

| |
|---|
| ``` { "@context": "dtmi:dtdl:context;2", "@type": "Interface", "displayName": "Thermostat", "description": "Reports current temperature and provides desired temperature control. ", "contents": [ Public double get_temperature (...); Public void increase_temperature (...); Public void decrease_temperature (...); ``` |
| ``` // ... ] } ``` |

As shown in Table 1, UE of the UE type "thermostat" support the following commands: get_temperature; increase_temperature; decrease_temperature.

FIG. 4 is a message flow diagram illustrating UE 102 being registered with AHF 122 according to some embodiments. The UE sends to DM 120 (e.g., a UDM) a registration message 422 which contains a UID for identifying the UE and a UE type ID identifying the type of the UE (message 422 may also contain the UCI indicating capabilities of the UE). The DM then sends to AHF 122 a registration message 424 which contains the UID (or an encrypted version of the UID (Enc(UID))) and the UE type ID (and the UCI if included in message 422). AHF 122 then stores in a database a record comprising the UID/Enc(UID) and the UE type ID and the UCI (either obtained from message 424 or message 422), thereby linking the UID/Enc(UID) with the UE type ID and UCI.

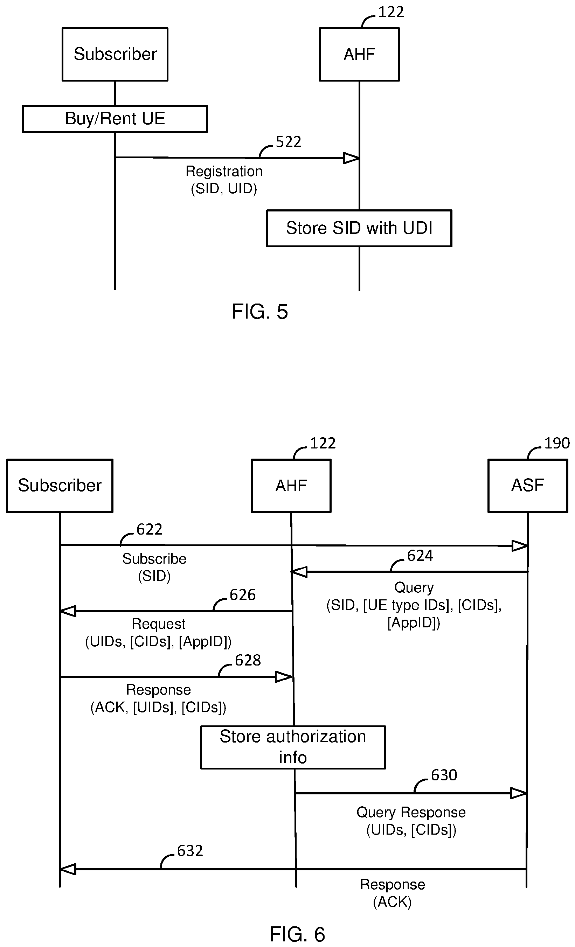

When a subscriber acquires the UE (e.g., buys or rents the UE), the subscriber may inform AHF 122. This is illustrated in the message flow diagram shown in FIG. 5. As shown in FIG. 5, the subscriber sends to AHF 122 a registration message 522 that contains a subscriber ID (SID) for the subscriber (e.g., username, email address, etc.) and the UID for the UE. AHF 122 then stores in a database the SID in association with the UID, thereby linking the UID with the SID. For example, AHF 122 may store in the database a record comprising the SID and the UID (the record may also contain the UE type ID). Additionally/Alternatively, AHF 122 may add the SID to a list of SIDs already associated with the UID, where each SID in the list identifies a subscriber that use the UE (e.g., the UE may be an automobile that is used by both a husband and wife).

After the subscriber registers the subscriber's UE, the subscriber may subscribe to a service provided by ASF 190. This step is shown in the message flow diagram shown in FIG. 6. More specifically, as shown in FIG. 6, the subscriber transmits to ASF 190 a subscribe message 622 (a.k.a., "application request message") comprising the subscriber's SID (the subscribe message 622 may further contain an application ID (AppID) (e.g., AppID = A-123) to identify the service (a.k.a., application) that the subscriber desires to obtain).

After receiving the subscribe message 622, ASF 190 transmits to AHF 122 a query message 624 comprising the subscriber's SID. Query message 624 may also contain a set of one or more UE type IDs. Each one of these UE type IDs identifies a type of UE that the subscriber must have to enable ASF 190 to provide the requested service to the subscriber. Additionally, in some embodiments, for one or more of the UE type IDs included in query message 624, query message 624 may further comprise a corresponding set of one more command IDs (CIDs), each CID identifying a command for which ASF 190 seeks authorization to invoke to provide the service to the subscriber. In some embodiments, query message also includes an AppID identifying the service to which the subscriber is subscribing (e.g., AppID = A-123).

After receiving query message 624, AHF 122 determines whether ASF 190 is able to provide the service to the subscriber. For example, assuming query message 624 includes the set of UE type IDs, AHF 122 determines, for each UE type ID included in query message 624, whether the subscriber identified by the SID included in message 624 has authorized access to (e.g., owns or rents or leases) a UE of the identified UE type. If, for any one of the UE type IDs, the subscriber is not in possession of a UE of that UE type, then the ASF is not able to provide the service to the subscriber because the subscriber does not have all of the necessary UEs.

Assuming the ASF is able to provide the service to the subscriber (i.e., the subscriber is in possession of the necessary UEs), then AHF 122 uses data stored in its database to retrieve the corresponding UIDs. For example, assume that message 624 contains the following UE type IDs: type-A and type-B; AHF 122 has in its database a subscriber record for the subscriber indicating that the subscriber has a first UE of type-A and a second UE of type-B and the subscriber record contains a UID for the first UE (e.g., UE-123) and contains a UID for the second UE (e.g., UE-345).

After obtaining the UIDs, AHF 122 transmits to the subscriber a message 626 comprising the obtained UIDs (message 626 may also contain the AppID) and requesting an acknowledgement from the subscriber that the subscriber authorizes the ASF to provide the service to the subscriber using the UEs identified by the UIDs included in the message. If message 624 included CIDs, then message 626 may also include the command IDs so that the subscriber can see which commands ASF 190 wants to be authorized to invoke on the corresponding UE.

After receiving message 626, the subscriber transmits to AHF 122 a response message 628. Response message contains information to indicate the UEs that the subscriber will allow the ASF to access (i.e., send commands to). For example, response message 628 may contain one or more of the UIDs that were included in message 626 to indicate the UEs that the subscriber will allow the ASF to access.

For example, UE-123 may be a watch and UE-345 may be a mobile phone. If the subscriber authorizes the ASF to access both the watch and the mobile phone, then both UIDs are included in message 628. But if the subscriber only authorizes the ASF to access the watch, then message 628 will include UID UE-123, but will not include UID UE-345.

Additionally, if a UID is included in response message 628, response message 628 may also include a corresponding list of one or more CIDs for the UID. This corresponding list of CIDs identifies the commands that the subscriber has authorized for ASF 190.

For example, if the watch has a temperature sensor that can provide temperature readings and a heart monitor that can provide pulse rate readings, the user may only want to authorize ASF 190 to request temperature readings but not pulse rate readings. Hence, in this scenario, the list of commands associated with UID UE-123 (the subscriber's watch) will identify the command for obtaining temperature readings from the watch, but will not identify the command for obtaining pulse rate readings from the watch.

After receiving response message 628, AHF 122 stores the information contained in the message. Table 2 below illustrates an example of the information that is stored:

**TABLE 2**

| | | |
|---|---|---|
| AppID = A-123 | UID = UE-123 | CID List = C1, C2 |
| | UID = UE-345 | CID List = C7 |

The information in Table 2 indicates that the service identified by AppID = A-123 is authorized to invoke commands C1 and C2 with respect to UE-123 (the subscriber's watch) and is authorized to invoke command C7 with respect to UE-345 (the subscriber mobile phone). Additionally, after receiving response message 628, AHF 122 transmits to ASF 190 a query response message 630 indicating the subscriber's UEs that ASF 190 is authorized to interact with and indicating the commands that ASF 190 may invoke with respect to those UEs. That is, for each such subscriber UE that ASF 190 is authorized to interact with, message 630 comprise a UE profile that contains a UID and a corresponding set of one more CIDs. For example, query response message may comprise the information shown in table 3:

**TABLE 3**

| | |
|---|---|
| UID = UE-123 or Encrypt(UE-123) | CID List = C1, C2 |
| UID = UE-345 or Encrypt(UE-345) | CID List = C7 |

As shown in Table 3, the query response message may comprise the actual UIDs or an encrypted version of the UID to protect the subscriber's privacy.

After receiving query response message 630, ASF 190 transmits to the subscriber a subscribe response message 632 to positively acknowledge the subscribe message 622.

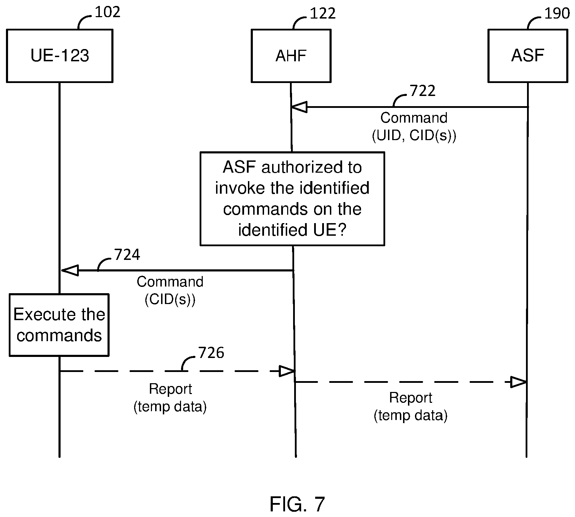

FIG. 7 is a message flow diagram, according to some embodiments, illustrating how ASF 190 is able to invoke one or more commands on UE-123 (e.g., UE 102 shown in FIG. 1). As shown in FIG. 7, ASF 190 transmits to AHF 122 a command message 722 that comprises: i) a UID = UE-123 or Encrypt(UE-123) (i.e., the UID that identifies the UE or the encrypted version of the UID) and ii) a set of one or more command IDs corresponding to the one or more commands.

After receiving command message 722, AHF 122 determines whether ASF 190 is authorized to invoke the identified command(s) on the UE identified by the UID. For example, using an ID associated with ASF 190 (e.g., AppID = A-123), which ID may be included in command message 722, AHF 122 can retrieve authorization information from a database (e.g., see Table 2 as an example of the authorization information) and determine whether the authorization indicates that ASF 190 is authorized to invoke the command(s) on UE-123. For example, if message 722 included CID C2, then, because C2 is in the list of CIDs for UE-123 as shown in Table 2, AHF 122 determines that ASF 190 is authorized (but if C2 was not in the list, then ASF 190 would not be authorized). After determining that ASF 190 is authorized to invoke the identified command(s) on UE-123, AHF 122 transmits to UE-123 a command message 724 for invoking the command(s) on UE-123. That is, command message 724 may contain the CIDs that were included in message 722.

After receiving command message 724, UE-123 executes the identified command(s). For example, if one of the commands is for UE-123 to provide an alert the subscriber, then UE-123 provides the alert. As another example, if one of the commands is for UE-123 to provide a temperature reading, then UE-123 uses its temperature sensor to obtain the temperature reading and then transmits a report message 726 containing the temperature data to AHF 122, which then forwards the report message to ASF 190.

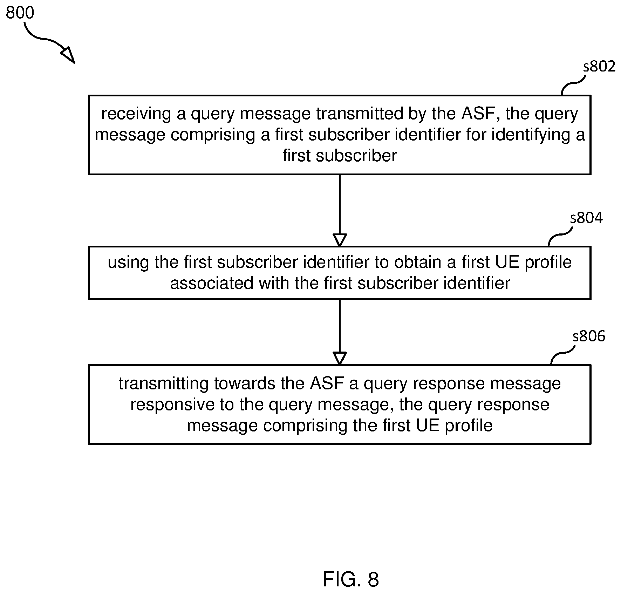

FIG. 8 is flowchart illustrating a process 800 according to some embodiments. Process 800 is performed by AHF 122 and may begin in step s802.

Step s802 comprises receiving a query message transmitted by ASF 190, the query message comprising a first subscriber identifier for identifying a first subscriber.

Step s804 comprises using the first subscriber identifier to obtain a first UE profile associated with the first subscriber identifier. For example, step s804 comprises AHF 122 using the subscriber identifier to transmit to the subscriber a request message (e.g., message 626), which causes subscriber to transmit to AHF 122 a response message (e.g., message 628) that comprises the first UE profile (e.g., a UID and a corresponding set of CIDs).

Step s806 comprises transmitting towards ASF 190 a query response message responsive to the query message, the query response message comprising the first UE profile. The first UE profile comprises i) a first UID for a first UE of a first UE type and ii) a first command ID that identifies a first command that ASF 190 is authorized to invoke with respect to the first UE in connection with providing a service to the first subscriber.

In some embodiments, the query message further comprises a first UE type identifier identifying the first UE type, and both the first subscriber identifier and the first UE type identifier are used to retrieve the first UE profile. In some embodiments, the query message further comprises a second UE type identifier, the first UE type identifier identifies a UE type manufactured by a first UE manufacturer, and the second UE type identifier identifies a UE type manufactured by a second UE manufacturer.

In some embodiments the process further includes using the first subscriber identifier and the second UE type identifier to retrieve a second UE profile associated with the first subscriber identifier and the second UE type identifier, wherein the query response message further comprises the second UE profile, and the second UE profile comprises i) a second UE identifier for a second UE of the second UE type and ii) a command identifier identifying a command that ASF 190 is authorized to invoke with respect to the second UE in connection with providing a service to the first subscriber.

In some embodiments, the query message further comprises a first set of one or more command identifiers associated with the first UE type identifier, the first set of one or more command identifiers comprising the first command. In some embodiments, the first set of one or more command identifiers further comprises a second command identifier, and the first UE profile indicates that ASF 190 is not authorized to invoke the second command with respect to the first device.

In some embodiments the process further includes receiving a command message transmitted by ASF 190, the command message comprising the first UE identifier identifying the first UE and the first command identifier identifying the first command. In some embodiments, the command message further comprises the first subscriber identifier, and the process further comprises: after receiving the command message, determining whether ASF 190 is authorized by the first subscriber to invoke the first command with respect to the first device; and after determining that ASF 190 is authorized by the first subscriber to invoke the first command with respect to the first device, transmitting towards the first UE a second command message comprising the command identifier. In some embodiments the process further includes receiving a first command response message responsive to the second command message, wherein the first command response message comprises data retrieved or generated by the first device; and transmitting towards ASF 190 a second command response message comprising said data.

In some embodiments, determining whether ASF 190 is authorized to invoke the first command with respect to the first UE comprises: retrieving authorization information using an application identifier associated with ASF 190 and the first subscriber identifier, wherein the authorization information indicates whether or not ASF 190 is authorized to invoke the first command with respect to the first device.

In some embodiments, the first UE identifier is an encrypted version of a UE identifier for identifying the first device.

In some embodiments the process further includes, prior to receiving the query message, receiving a registration message transmitted by an owner of the first device, the registration message comprising the first UE type identifier and the first UE identifier; and, after receiving the registration message, storing a record comprising the first UE type identifier and the first UE identifier.

In some embodiments, the first subscriber identifier is linked with the first UE identifier, and a second subscriber identifier for identifying a second user is also linked with the first UE identifier.

In some embodiments the process also includes receiving a second query message transmitted by ASF 190, the second query message comprising the second subscriber identifier; using the second subscriber identifier to obtain a second UE profile associated with the second subscriber identifier; and transmitting towards ASF 190 a second query response message responsive to the second query message, the second query response message comprising the second UE profile, wherein the second UE profile comprises i) the first UE identifier for the first UE of the first UE type and ii) a command identifier that identifies a command that ASF 190 may invoke with respect to the first device.

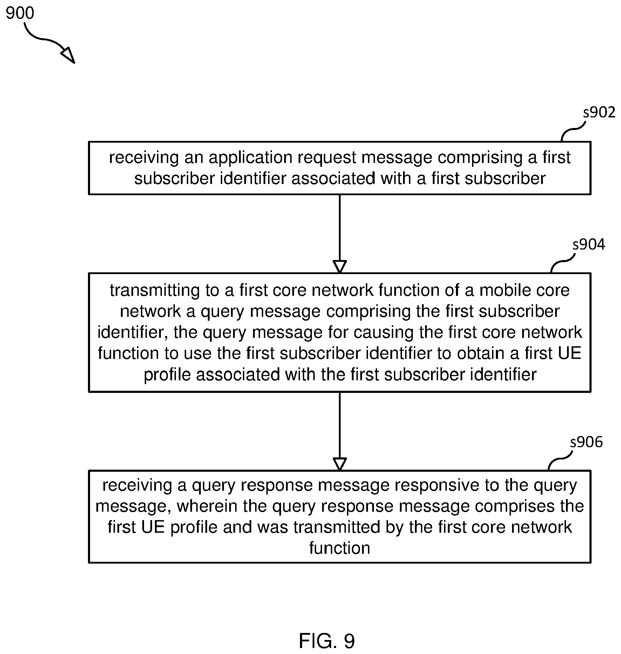

FIG. 9 is flowchart illustrating a process 900 according to some embodiments. Process 900 is performed by ASF 190 and may begin in step s902.

Step s902 comprises receiving an application request message (e.g., message 622) comprising a first subscriber identifier associated with a first subscriber.

Step s904 comprises transmitting to AHF 122 a query message (e.g., message 624) comprising the first subscriber identifier, the query message for causing the AHF to use the first subscriber identifier to obtain a first UE profile associated with the first subscriber identifier.

Step s906 comprises receiving a query response message responsive to the query message, wherein the query response message comprises the first UE profile and was transmitted by the AHF. The first UE profile comprises i) a first UE identifier for a first UE of a first UE type and ii) a first command identifier that identifies a first command that ASF 190 is authorized to invoke with respect to the first UE in connection with providing a service to the first subscriber.

In some embodiments, the query message further comprises the first UE type identifier and a second UE type identifier, the first UE type identifier identifies a UE type manufactured by a first UE manufacturer, and the second UE type identifier identifies a UE type manufactured by a second UE manufacturer. In some embodiments, the query message further causes the AHF to use the first subscriber identifier and the second UE type identifier to search for a second UE profile associated with the first subscriber identifier and the second UE type identifier, the query response message further comprises the second UE profile, wherein the second UE profile comprises a second UE identifier for a second UE of the second UE type, and the second UE profile further comprises information identifying at least one command that ASF 190 is authorized to invoke with respect to the second UE in connection with providing a service to the first subscriber.

In some embodiments, the query message further comprises a first set of one or more command identifiers associated with the first UE type identifier, the first set of one or more command identifiers comprising the first command. In some embodiments, the first set of one or more command identifiers further comprises a second command identifier, the first UE profile does not comprise the second command identifier, and ASF 190 determines that it is not authorized to invoke the second command with respect to the first UE as a result of determining that the first UE profile does not comprise the second command identifier.

In some embodiments the process further includes ASF 190 invoking the first command with respect to the first device. In some embodiments, invoking the first command with respect to the first UE comprises ASF 190 transmitting to the AHF or to a second core network function of the mobile core network a command message comprising the first UE identifier and the first command identifier. In some embodiments the process further includes receiving a command response message responsive to the command message, wherein the command response message comprises one or more of: i) data retrieved by the first device, ii) data generated by the first device, or iii) an acknowledgement of the command message.

In some embodiments, the first UE identifier is an encrypted version of a UE identifier for identifying the first device.

In some embodiments the application request message was transmitted by UE, and the process further comprises, in response to receiving the query response message, transmitting to the UE a confirmation message responsive to the application request message.

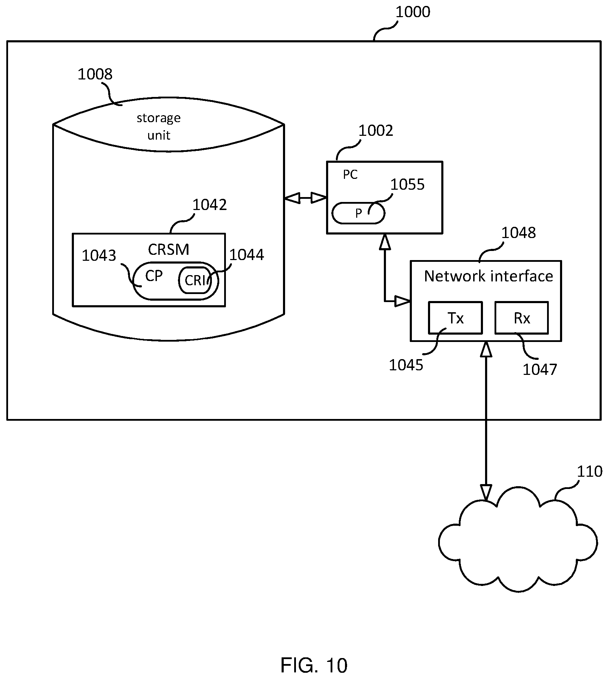

FIG. 10 is a block diagram of network node 1000, according to some embodiments, which can be used to implement any of the network functions (NFs) disclosed herein (e.g., AHF, DM, ASF, etc.). For instance, in embodiments where an NF consists of software, network node 1000 may run the NF (or execute a virtual machine that runs the NF). As shown in FIG. 10, network node 1000 may comprise: processing circuitry (PC) 1002, which may include one or more processors (P) 1055 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., network node 1000 may be a distributed computing apparatus); at least one network interface 1048 (e.g., a physical interface or air interface) comprising a transmitter (Tx) 1045 and a receiver (Rx) 1047 for enabling network node 1000 to transmit data to and receive data from other nodes connected to a network 110 (e.g., an Internet Protocol (IP) network) to which network interface 1048 is connected (physically or wirelessly) (e.g., network interface 1048 may be coupled to an antenna arrangement comprising one or more antennas for enabling network node 1000 to wirelessly transmit/receive data); and a local storage unit (a.k.a., "data storage system") 1008, which may include one or more non-volatile storage devices and/or one or more volatile storage devices. In embodiments where PC 1002 includes a programmable processor, a computer readable storage medium (CRSM) 1042 may be provided. CRSM 1042 stores a computer program (CP) 1043 comprising computer readable instructions (CRI) 1044. CRSM 1042 may be a non-transitory computer readable medium, such as, magnetic media (e.g., a hard disk), optical media, memory devices (e.g., random access memory, flash memory), and the like. In some embodiments, the CRI 1044 of computer program 1043 is configured such that when executed by PC 1002, the CRI causes network node 1000 to perform steps described herein (e.g., steps described herein with reference to the flow charts). In other embodiments, network node 1000 may be configured to perform steps described herein without the need for code. That is, for example, PC 1002 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (800) performed by an application handling function, AHF (122), of a mobile core network (106), the method comprising:
receiving (s802) a query message (624) transmitted by an application server function, ASF (190), the query message comprising a first subscriber identifier, SID, for identifying the first subscriber;
using (s804) the first SID to obtain a first user equipment, UE, profile associated with the first SID; and
transmitting (s806) towards the ASF (190) a query response message (630) responsive to the query message, the query response message comprising the first UE profile, wherein
the first UE profile comprises i) a first UE identifier, UID, for the first UE of a first UE type and ii) at least one command identifier, CID, each CID identifying a command that the ASF (190) has been authorized to invoke with respect to the first UE in connection with the ASF providing a service to the first subscriber, wherein using the first SID to obtain the first UE profile comprises: transmitting to the first subscriber a request message comprising the first UID and requesting authorization from the first subscriber for the ASF to invoke the at least one CID with respect to the first UE; and receiving from the first subscriber a response message indicating that the first subscriber authorizes the ASF to invoke the at least one CID with respect to the first UE.

2. The method of claim 1, wherein
the query message further comprises a first UE type identifier identifying the first UE type, and
both the first subscriber identifier and the first UE type identifier are used to retrieve the first UE profile.

3. The method of claim 2, wherein
the query message further comprises a second UE type identifier,
the first UE type identifier identifies a UE type manufactured by a first UE manufacturer, and
the second UE type identifier identifies a UE type manufactured by the first or a second UE manufacturer.

4. The method of claim 3, further comprising using the first subscriber identifier and the second UE type identifier to retrieve a second UE profile associated with the first subscriber identifier and the second UE type identifier, wherein
the query response message further comprises the second UE profile, and
the second UE profile comprises i) a second UE identifier for a second UE of the second UE type and ii) a command identifier identifying a command that the ASF (190) is authorized to invoke with respect to the second UE in connection with providing a service to the first subscriber.

5. A method (900) performed by an application server function, ASF (190), providing a service to subscribers, the method comprising:
receiving (s902) from a first subscriber, an application request message (622) comprising a first subscriber identifier, SID, associated with the first subscriber;
transmitting (s904) to an application handling function, AHF (122) of a mobile core network (106) a query message (624) comprising the first SID, the query message causing the AHF to use the first SID to obtain a first user equipment, UE, profile associated with the first subscriber identifier; and
receiving (s906), from the AHF, a query response message (630) responsive to the query message, wherein the query response message comprises the first UE profile, wherein
the first UE profile comprises i) a first UE identifier, UID, for the first UE of a first UE type and ii) at least one command identifier, CID, each CID identifying a command that the ASF (190) has been authorized to invoke with respect to the first UE in connection with the ASF providing a service to the first subscriber, wherein the first UE profile is based on authorization information received by the AHF (122) from the first subscriber in a response message (628) sent in response to a request message (626) transmitted by the AHF (122) to the first subscriber, the request message (626) comprising the first UID and requesting authorization for the ASF (190) to invoke the at least one CID with respect to the first UE (102).

6. The method of claim 5, wherein
the query message further comprises a first UE type identifier identifying the first UE type and a second UE type identifier,
the first UE type identifier identifies a UE type manufactured by a first UE manufacturer, and
the second UE type identifier identifies a UE type manufactured by the first or a second UE manufacturer.

7. The method of claim 6, wherein
the query message further causes the AHF to use the first subscriber identifier and the second UE type identifier to search for a second UE profile associated with the first subscriber identifier and the second UE type identifier,
the query response message further comprises the second UE profile,
the second UE profile comprises a second UE identifier for a second UE of the second UE type, and
the second UE profile further comprises information identifying at least one command that the ASF (190) is authorized to invoke with respect to the second UE in connection with providing a service to the first subscriber.

8. The method of any one of claims 6-7, wherein
the query message further comprises a first set of one or more command identifiers associated with the first UE type identifier, the first set of one or more command identifiers comprises a first command identifier identifying a first command.

9. The method of claim 8, wherein
the first set of one or more command identifiers further comprises a second command identifier identifying a second command,
the first UE profile does not comprise the second command identifier, and
the ASF (190) determines that it is not authorized to invoke the second command with respect to the first UE as a result of determining that the first UE profile does not comprise the second command identifier.

10. A computer program (1043) comprising instructions (1044) which when executed by processing circuitry (1002) of a network node (1000) causes the network node to perform the method of any one of claims 1-4.

11. A computer program (1043) comprising instructions (1044) which when executed by processing circuitry (1002) of a network node (1000) causes the network node to perform the method of any one of claims 5-9.

12. A carrier containing the computer program of claim 10 or 11, wherein the carrier is one of an electronic signal, an optical signal, a radio signal, and a computer readable storage medium (1042).

13. A network node (1000) being configured to:
receive a query message (624) transmitted by an application server function, ASF (190), the query message comprising a first subscriber identifier, SID, for identifying the first subscriber;
use the first SID to obtain a first user equipment, UE, profile associated with the first subscriber identifier, wherein using the first SID to obtain the first UE profile comprises: transmitting to the first subscriber a request message comprising a first UID and requesting authorization from the first subscriber for the ASF to invoke at least one CID with respect to a first UE; and receiving from the first subscriber a response message indicating that the first subscriber authorizes the ASF to invoke the at least one CID with respect to the first UE; and
transmit towards the ASF (190) a query response message (630) responsive to the query message,
the query response message comprising the first UE profile, wherein
the first UE profile comprises i) the first UE identifier, UID, for the first UE of a first UE type and ii) the at least one command identifier, CID, each CID identifying a command that the ASF (190) has been authorized to invoke with respect to the first UE in connection with the ASF providing a service to the first subscriber.

14. The network node of claim 13, wherein the network node is further configured to perform the method of any one of claims 2-4.

15. A network node (1000) being configured to:
receive an application request message (622) comprising a first subscriber identifier, SID, associated with the first subscriber;
transmit to an application handling function, AHF (122), of a mobile core network (106) a query message (624) comprising the first SID, the query message causing the AHF to use the first SID to obtain a first user equipment, UE, profile associated with the first subscriber identifier; and
receive, from the AHF, a query response message (630) responsive to the query message, wherein the query response message comprises the first UE profile, wherein
the first UE profile comprises i) a first UE identifier, UID, for the first UE of a first UE type and ii) at least one command identifier, CID, each CID identifying a command that the ASF (190) has been authorized to invoke with respect to the first UE in connection with the ASF providing a service to the first subscriber.

16. The network node of claim 15, wherein the network node is further configured to perform the method of any one of claims 6-9.

17. A network node (1000) comprising:
processing circuitry (1002); and
a memory (1042), the memory containing instructions (1044) executable by the processing circuitry, whereby the network node is operative to perform the method of any one of claims 1-9.

## Patentansprüche

1. Verfahren (800), das durch eine Anwendungshandhabungsfunktion, AHF (122), eines mobilen Kernnetzwerks (106) durchgeführt wird, wobei das Verfahren Folgendes umfasst:
Empfangen (s802) einer Abfragenachricht (624), die durch eine Anwendungsserverfunktion, ASF (190), gesendet wird, wobei die Abfragenachricht eine erste Teilnehmerkennung, SID, zum Identifizieren des ersten Teilnehmers umfasst;
Verwenden (s804) der ersten SID, um ein erstes Benutzereinrichtungsprofil, UE-Profil, zu erlangen, das der ersten SID zugeordnet ist; und
Übertragen (s806), in Richtung der ASF (190), einer Abfrageantwortnachricht (630) als Antwort auf die Abfragenachricht, wobei die Abfrageantwortnachricht das erste UE-Profil umfasst, wobei
das erste UE-Profil i) eine erste UE-Kennung, UID, für die erste UE einer ersten UE-Art und ii) mindestens eine Befehlskennung, CID, umfasst, wobei jede CID einen Befehl identifiziert, den die ASF (190) in Bezug auf die erste UE im Zusammenhang damit aufzurufen autorisiert wurde, dass die ASF einen Dienst an den ersten Teilnehmer bereitstellt, wobei das Verwenden der ersten SID, um das erste UE-Profil zu erlangen, Folgendes umfasst: Übertragen, an den ersten Teilnehmer, einer Anforderungsnachricht, umfassend die erste UID, und Anfordern einer Autorisierung von dem ersten Teilnehmer für die ASF, die mindestens eine CID in Bezug auf die erste UE aufzurufen; und Empfangen, von dem ersten Teilnehmer, einer Antwortnachricht, die angibt, dass der erste Teilnehmer die ASF autorisiert, die mindestens eine CID in Bezug auf die erste UE aufzurufen.

2. Verfahren nach Anspruch 1, wobei
die Abfragenachricht ferner eine erste UE-Artkennung umfasst, welche die erste UE-Art identifiziert, und
sowohl die erste Teilnehmerkennung als auch die erste UE-Artkennung dazu verwendet wird, das erste UE-Profil abzurufen.

3. Verfahren nach Anspruch 2, wobei
die Abfragenachricht ferner eine zweite UE-Artkennung umfasst, die erste UE-Artkennung eine UE-Art identifiziert, die durch einen ersten UE-Hersteller hergestellt ist, und
die zweite UE-Artkennung eine UE-Art identifiziert, die durch den ersten oder einen zweiten UE-Hersteller hergestellt ist.

4. Verfahren nach Anspruch 3, ferner umfassend Verwenden der ersten Teilnehmerkennung und der zweiten UE-Artkennung, um ein zweites UE-Profil abzurufen, das der ersten Teilnehmerkennung und der zweiten UE-Artkennung zugeordnet ist, wobei die Abfrageantwortnachricht ferner das zweite UE-Profil umfasst und
das zweite UE-Profil i) eine zweite UE-Kennung für eine zweite UE der zweiten UE-Art und ii) eine Befehlskennung umfasst, die einen Befehl identifiziert, den die ASF (190) in Bezug auf die zweite UE im Zusammenhang mit dem Bereitstellen eines Dienstes an den ersten Teilnehmer aufzurufen autorisiert ist.

5. Verfahren (900), das durch eine Anwendungsserverfunktion, ASF-Funktion (190), die einen Dienst an Teilnehmer bereitstellt, durchgeführt wird, wobei das Verfahren Folgendes umfasst:
Empfangen (s902), von einem ersten Teilnehmer, einer Anwendungsanforderungsnachricht (622), umfassend eine erste Teilnehmerkennung, SID, die dem ersten Teilnehmer zugeordnet ist;
Übertragen (s904), an eine Anwendungshandhabungsfunktion, AHF (122), eines mobilen Kernnetzwerks (106), einer Abfragenachricht (624), umfassend die erste SID, wobei die Abfragenachricht die AHF dazu veranlasst, die erste SID dazu zu verwenden, ein erstes Benutzereinrichtungsprofil, UE-Profil, zu erlangen, das der ersten Teilnehmerkennung zugeordnet ist; und
Empfangen (s906), von der AHF, einer Abfrageantwortnachricht (630) als Antwort auf die Abfragenachricht, wobei die Abfrageantwortnachricht das erste UE-Profil umfasst, wobei das erste UE-Profil i) eine erste UE-Kennung, UID, für die erste UE einer ersten UE-Art und ii) mindestens eine Befehlskennung, CID, umfasst, wobei jede CID einen Befehl identifiziert, den die ASF (190) in Bezug auf die erste UE im Zusammenhang damit aufzurufen autorisiert wurde, dass die ASF einen Dienst an den ersten Teilnehmer bereitstellt, wobei das erste UE-Profil auf Autorisierungsinformationen basiert, die durch die AHF (122) von dem ersten Teilnehmer in einer Antwortnachricht (628) empfangen werden, die als Antwort auf eine Anforderungsnachricht (626) gesendet wird, die durch die AHF (122) an den ersten Teilnehmer übertragen wird, wobei die Anforderungsnachricht (626) die erste UID umfasst und eine Autorisierung für die ASF (190) anfordert, die mindestens eine CID in Bezug auf die erste UE (102) aufzurufen.

6. Verfahren nach Anspruch 5, wobei
die Abfragenachricht ferner eine erste UE-Artkennung, welche die erste UE-Art identifiziert, und eine zweite UE-Artkennung umfasst,
die erste UE-Artkennung eine UE-Art identifiziert, die durch einen ersten UE-Hersteller hergestellt ist, und
die zweite UE-Artkennung eine UE-Art identifiziert, die durch den ersten oder einen zweiten UE-Hersteller hergestellt ist.

7. Verfahren nach Anspruch 6, wobei
die Abfragenachricht ferner die AHF dazu veranlasst, die erste Teilnehmerkennung und die zweite UE-Artkennung dazu zu verwenden, nach einem zweiten UE-Profil zu suchen, das der ersten Teilnehmerkennung und der zweiten UE-Artkennung zugeordnet ist,
die Abfrageantwortnachricht ferner das zweite UE-Profil umfasst, das zweite UE-Profil eine zweite UE-Kennung für eine zweite UE der zweiten UE-Art umfasst und
das zweite UE-Profil ferner Informationen umfasst, die mindestens einen Befehl identifizieren, den die ASF (190) in Bezug auf die zweite UE im Zusammenhang mit dem Bereitstellen eines Dienstes an den ersten Teilnehmer aufzurufen autorisiert ist.

8. Verfahren nach einem der Ansprüche 6-7, wobei die Abfragenachricht ferner einen ersten Satz einer oder mehrerer Befehlskennungen umfasst, welcher der ersten UE-Artkennung zugeordnet ist, wobei der erste Satz einer oder mehrerer Befehlskennungen eine erste Befehlskennung umfasst, die einen ersten Befehl identifiziert.

9. Verfahren nach Anspruch 8, wobei
der erste Satz einer oder mehrerer Befehlskennungen eine zweite Befehlskennung umfasst, die einen zweiten Befehl identifiziert, das erste UE-Profil die zweite Befehlskennung nicht umfasst und die ASF (190) infolge von Bestimmen, dass das erste UE-Profil die zweite Befehlskennung nicht umfasst, bestimmt, dass sie nicht autorisiert ist, den zweiten Befehl in Bezug auf die erste UE aufzurufen.

10. Computerprogramm (1043), umfassend Anweisungen (1044), die, wenn sie durch eine Verarbeitungsschaltung (1002) eines Netzwerkknotens (1000) ausgeführt werden, den Netzwerkknoten dazu veranlassen, das Verfahren nach einem der Ansprüche 1-4 durchzuführen.

11. Computerprogramm (1043), umfassend Anweisungen (1044), die, wenn sie durch eine Verarbeitungsschaltung (1002) eines Netzwerkknotens (1000) ausgeführt werden, den Netzwerkknoten dazu veranlassen, das Verfahren nach einem der Ansprüche 5-9 durchzuführen.

12. Träger, enthaltend das Computerprogramm nach Anspruch 10 oder 11, wobei der Träger eines von einem elektronischen Signal, einem optischen Signal, einem Funksignal und einem computerlesbaren Speichermedium (1042) ist.

13. Netzwerkknoten (1000), der zu Folgendem konfiguriert ist:
Empfangen einer Abfragenachricht (624), die durch eine Anwendungsserverfunktion, ASF (190), gesendet wird, wobei die Abfragenachricht eine erste Teilnehmerkennung, SID, zum Identifizieren des ersten Teilnehmers umfasst;
Verwenden der ersten SID, um ein erstes Benutzereinrichtungsprofil, UE-Profil, zu erlangen, das der ersten Teilnehmerkennung zugeordnet ist, wobei das Verwenden der ersten SID, um das erste UE-Profil zu erlangen, Folgendes umfasst: Übertragen, an den ersten Teilnehmer, einer Anforderungsnachricht, umfassend eine erste UID, und Anfordern einer Autorisierung von dem ersten Teilnehmer für die ASF, mindestens eine CID in Bezug auf eine erste UE aufzurufen; und Empfangen, von dem ersten Teilnehmer, einer Antwortnachricht, die angibt, dass der erste Teilnehmer die ASF autorisiert, die mindestens eine CID in Bezug auf die erste UE aufzurufen; und Übertragen, in Richtung der ASF (190), einer Abfrageantwortnachricht (630) als Antwort auf die Abfragenachricht, wobei die Abfrageantwortnachricht das erste UE-Profil umfasst, wobei
das erste UE-Profil i) die erste UE-Kennung, UID, für die erste UE einer ersten UE-Art und ii) die mindestens eine Befehlskennung, CID, umfasst, wobei jede CID einen Befehl identifiziert, den die ASF (190) in Bezug auf die erste UE im Zusammenhang damit aufzurufen autorisiert wurde, dass die ASF einen Dienst an den ersten Teilnehmer bereitstellt.

14. Netzwerkknoten nach Anspruch 13, wobei der Netzwerkknoten ferner dazu konfiguriert ist, das Verfahren nach einem der Ansprüche 2-4 durchzuführen.

15. Netzwerkknoten (1000), der zu Folgendem konfiguriert ist:
Empfangen einer Anwendungsanforderungsnachricht (622), umfassend eine erste Teilnehmerkennung, SID, die dem ersten Teilnehmer zugeordnet ist;
Übertragen, an eine Anwendungshandhabungsfunktion, AHF (122), eines mobilen Kernnetzwerks (106), einer Abfragenachricht (624), umfassend die erste SID, wobei die Abfragenachricht die AHF dazu veranlasst, die erste SID dazu zu verwenden, ein erstes Benutzereinrichtungsprofil, UE-Profil, zu erlangen, das der ersten Teilnehmerkennung zugeordnet ist; und
Empfangen, von der AHF, einer Abfrageantwortnachricht (630) als Antwort auf die Abfragenachricht, wobei die Abfrageantwortnachricht das erste UE-Profil umfasst, wobei das erste UE-Profil i) eine erste UE-Kennung, UID, für die erste UE einer ersten UE-Art und ii) mindestens eine Befehlskennung, CID, umfasst, wobei jede CID einen Befehl identifiziert, den die ASF (190) in Bezug auf die erste UE im Zusammenhang damit aufzurufen autorisiert wurde, dass die ASF einen Dienst an den ersten Teilnehmer bereitstellt.

16. Netzwerkknoten nach Anspruch 15, wobei der Netzwerkknoten ferner dazu konfiguriert ist, das Verfahren nach einem der Ansprüche 6-9 durchzuführen.

17. Netzwerkknoten (1000), umfassend:
eine Verarbeitungsschaltung (1002); und
einen Speicher (1042), wobei der Speicher Anweisungen (1044) enthält, die durch die Verarbeitungsschaltung ausführbar sind, wobei der Netzwerkknoten dazu betriebswirksam ist, das Verfahren nach einem der Ansprüche 1-9 durchzuführen.

## Revendications

1. Procédé (800) réalisé par une fonction de gestion d'applications, AHF (122), d'un cœur de réseau mobile (106), le procédé comprenant :
la réception (s802) d'un message de requête (624) transmis par une fonction de serveur d'applications, ASF (190), le message de requête comprenant un premier identifiant d'abonné, SID, pour identifier le premier abonné ;
l'utilisation (s804) du premier SID pour obtenir un premier profil d'équipement utilisateur, UE, associé au premier SID ; et
la transmission (s806) vers l'ASF (190) d'un message de réponse de requête (630) répondant au message de requête, le message de réponse de requête comprenant le premier profil d'UE, dans lequel
le premier profil d'UE comprend i) un premier identifiant d'UE, UID, pour le premier UE d'un premier type d'UE et ii) au moins un identifiant de commande, CID, chaque CID identifiant une commande que l'ASF (190) a été autorisée à invoquer par rapport au premier UE en relation avec la fourniture par l'ASF d'un service au premier abonné, dans lequel l'utilisation du premier SID pour obtenir le premier profil d'UE comprend : transmission au premier abonné d'un message de demande comprenant le premier UID et demandant une autorisation provenant du premier abonné pour que l'ASF invoque l'au moins un CID par rapport au premier UE ; et
la réception, provenant du premier abonné, d'un message de réponse indiquant que le premier abonné autorise l'ASF à invoquer l'au moins un CID par rapport au premier UE.

2. Procédé selon la revendication 1, dans lequel le message de requête comprend en outre un premier identifiant de type d'UE identifiant le premier type d'UE, et le premier identifiant d'abonné ainsi que le premier identifiant de type d'UE sont tous deux utilisés pour récupérer le premier profil d'UE.

3. Procédé selon la revendication 2, dans lequel le message de requête comprend en outre un second identifiant de type d'UE,
le premier identifiant de type d'UE identifie un type d'UE fabriqué par un premier fabricant d'UE, et
le second identifiant de type d'UE identifie un type d'UE fabriqué par le premier ou un second fabricant d'UE.

4. Procédé selon la revendication 3, comprenant en outre l'utilisation du premier identifiant d'abonné et du second identifiant de type d'UE pour récupérer un second profil d'UE associé au premier identifiant d'abonné et au second identifiant de type d'UE, dans lequel
le message de réponse de requête comprend en outre le second profil d'UE, et
le second profil d'UE comprend i) un second identifiant d'UE pour un second UE du second type d'UE et ii) un identifiant de commande identifiant une commande que l'ASF (190) est autorisée à invoquer par rapport au second UE en relation avec la fourniture d'un service au premier abonné.

5. Procédé (900) réalisé par une fonction de serveur d'applications, ASF (190), fournissant un service à des abonnés, le procédé comprenant :
la réception (s902), provenant d'un premier abonné, d'un message de demande d'application (622) comprenant un premier identifiant d'abonné, SID, associé au premier abonné ;
la transmission (s904), à une fonction de gestion d'applications, AHF (122) d'un cœur de réseau mobile (106), d'un message de requête (624) comprenant le premier SID, le message de requête amenant l'AHF à utiliser le premier SID pour obtenir un premier profil d'équipement utilisateur, UE, associé au premier identifiant d'abonné ; et
la réception (s906), provenant de l'AHF, d'un message de réponse de requête (630) répondant au message de requête, dans lequel le message de réponse de requête comprend le premier profil d'UE, dans lequel
le premier profil d'UE comprend i) un premier identifiant d'UE, UID, pour le premier UE d'un premier type d'UE et ii) au moins un identifiant de commande, CID, chaque CID identifiant une commande que l'ASF (190) a été autorisée à invoquer par rapport au premier UE en relation avec la fourniture par l'ASF d'un service au premier abonné, dans lequel le premier profil d'UE est basé sur des informations d'autorisation reçues par l'AHF (122) provenant du premier abonné dans un message de réponse (628) envoyé en réponse à un message de demande (626) transmis au premier abonné par l'AHF (122), le message de demande (626) comprenant le premier UID et demandant une autorisation pour que l'ASF (190) invoque l'au moins un CID par rapport au premier UE (102).

6. Procédé selon la revendication 5, dans lequel le message de requête comprend en outre un premier identifiant de type d'UE identifiant le premier type d'UE et un second identifiant de type d'UE,
le premier identifiant de type d'UE identifie un type d'UE fabriqué par un premier fabricant d'UE, et
le second identifiant de type d'UE identifie un type d'UE fabriqué par le premier ou un second fabricant d'UE.

7. Procédé selon la revendication 6, dans lequel le message de requête amène en outre l'AHF à utiliser le premier identifiant d'abonné et le second identifiant de type d'UE pour rechercher un second profil d'UE associé au premier identifiant d'abonné et au second identifiant de type d'UE, le message de réponse de requête comprend en outre le second profil d'UE,
le second profil d'UE comprend un second identifiant d'UE pour un second UE du second type d'UE, et
le second profil d'UE comprend en outre des informations identifiant au moins une commande que l'ASF (190) est autorisée à invoquer par rapport au second UE en relation avec la fourniture d'un service au premier abonné.

8. Procédé selon l'une quelconque des revendications 6 à 7, dans lequel
le message de requête comprend en outre un premier ensemble d'un ou plusieurs identifiants de commande associés au premier identifiant de type d'UE, le premier ensemble d'un ou plusieurs identifiants de commande comprend un premier identifiant de commande identifiant une première commande.

9. Procédé selon la revendication 8, dans lequel le premier ensemble d'un ou plusieurs identifiants de commande comprend en outre un second identifiant de commande identifiant une seconde commande,
le premier profil d'UE ne comprend pas le second identifiant de commande, et
l'ASF (190) détermine qu'elle n'est pas autorisée à invoquer la seconde commande par rapport au premier UE par suite de la détermination du fait que le premier profil d'UE ne comprend pas le second identifiant de commande.

10. Programme informatique (1043) comprenant des instructions (1044) qui, lorsqu'elles sont exécutées par une circuiterie de traitement (1002) d'un nœud de réseau (1000), amènent le nœud de réseau à réaliser le procédé selon l'une quelconque des revendications 1 à 4.

11. Programme informatique (1043) comprenant des instructions (1044) qui, lorsqu'elles sont exécutées par une circuiterie de traitement (1002) d'un nœud de réseau (1000), amènent le nœud de réseau à réaliser le procédé selon l'une quelconque des revendications 5 à 9.

12. Support contenant le programme informatique selon la revendication 10 ou 11, dans lequel le support est l'un parmi un signal électronique, un signal optique, un signal radio et un support de stockage lisible par ordinateur (1042).

13. Nœud de réseau (1000) configuré pour :
recevoir un message de requête (624) transmis par une fonction de serveur d'applications, ASF (190), le message de requête comprenant un premier identifiant d'abonné, SID, pour identifier le premier abonné ;
utiliser le premier SID pour obtenir un premier profil d'équipement utilisateur, UE, associé au premier identifiant d'abonné, dans lequel l'utilisation du premier SID pour obtenir le premier profil d'UE comprend : premier abonné d'un message de demande comprenant un premier UID et demandant une autorisation provenant du premier abonné pour que l'ASF invoque au moins un CID par rapport à un premier UE ; et la réception, provenant du premier abonné, d'un message de réponse indiquant que le premier abonné autorise l'ASF à invoquer l'au moins un CID par rapport au premier UE ; et
transmettre vers l'ASF (190) un message de réponse de requête (630) répondant au message de requête, le message de réponse de requête comprenant le premier profil d'UE, dans lequel le premier profil d'UE comprend i) le premier identifiant d'UE, UID, pour le premier UE d'un premier type d'UE et ii) l'au moins un identifiant de commande, CID, chaque CID identifiant une commande que l'ASF (190) a été autorisée à invoquer par rapport au premier UE en relation avec la fourniture par l'ASF d'un service au premier abonné.

14. Nœud de réseau selon la revendication 13, dans lequel le nœud de réseau est en outre configuré pour réaliser le procédé selon l'une quelconque des revendications 2 à 4.

15. Nœud de réseau (1000) configuré pour :
recevoir un message de demande d'application (622) comprenant un premier identifiant d'abonné, SID, associé au premier abonné ;
transmettre à une fonction de gestion d'applications, AHF (122), d'un cœur de réseau mobile (106) un message de requête (624) comprenant le premier SID, le message de requête amenant l'AHF à utiliser le premier SID pour obtenir un premier profil d'équipement utilisateur, UE, associé au premier identifiant d'abonné ; et
recevoir, provenant de l'AHF, un message de réponse de requête (630) répondant au message de requête, dans lequel le message de réponse de requête comprend le premier profil d'UE, dans lequel
le premier profil d'UE comprend i) un premier identifiant d'UE, UID, pour le premier UE d'un premier type d'UE et ii) au moins un identifiant de commande, CID, chaque CID identifiant une commande que l'ASF (190) a été autorisée à invoquer par rapport au premier UE en relation avec la fourniture par l'ASF d'un service au premier abonné.

16. Nœud de réseau selon la revendication 15, dans lequel le nœud de réseau est en outre configuré pour réaliser le procédé selon l'une quelconque des revendications 6 à 9.

17. Nœud de réseau (1000), comprenant :
une circuiterie de traitement (1002) ; et
une mémoire (1042), la mémoire contenant des instructions (1044) exécutables par la circuiterie de traitement, moyennant quoi le nœud de réseau est opérationnel pour réaliser le procédé selon l'une quelconque des revendications 1 à 9.
